# EUROPÄISCHE PATENTSCHRIFT

(11) **EP 4 133 921 B1**
(45) Veröffentlichungstag und Bekanntmachung des Hinweises auf die Patenterteilung: **29.01.2025**
(21) Anmeldenummer: 22168285.9
(22) Anmeldetag: 14.04.2022
(51) Int. Cl.: A01B 63/111, A01B 63/00, A01B 79/00

(54) **VERFAHREN ZUM SAMMELN VON LANDWIRTSCHAFTLICHEN MESSDATEN BEI EINER LANDWIRTSCHAFTLICHEN ARBEITSMASCHINE**
METHOD FOR COLLECTING AGRICULTURAL MEASUREMENT DATA IN AN AGRICULTURAL WORKING MACHINE
PROCÉDÉ DE COLLECTE DE DONNÉES DE MESURE AGRICOLES DANS UNE MACHINE DE TRAVAIL AGRICOLE

(30) Priorität: 10.08.2021 DE 102021120757
(43) Veröffentlichungstag der Anmeldung: 15.02.2023
(73) Patentinhaber: CLAAS Tractor SAS, 78141 Vélizy-Villacoublay Cedex (FR)
(72) Erfinder: Wieckhorst, Jan Carsten, 29525 Uelzen Orsteil Hanstedt 2 (DE); Ehlert, Christian, 33719 Bielefeld (DE); Birkmann, Christian, 33775 Versmold (DE)
(74) Vertreter: CLAAS 365FarmNet GmbH

(56) Entgegenhaltungen:
- DE-A1- 102010 031 344
- US-A1- 2016 071 223
- US-A1- 2017 315 555
- US-A1- 2018 120 133

## Beschreibung

Die vorliegende Erfindung betrifft ein Verfahren zum Sammeln von landwirtschaftlichen Messdaten bei einer landwirtschaftlichen Arbeitsmaschine, gemäß dem Oberbegriff von Anspruch 1 sowie eine Sensoranordnung gemäß dem Anspruch 14.

Der bekannte Stand der Technik (DE 10 2016 118 203 A1) von dem die Erfindung ausgeht, betrifft ein Verfahren gemäß dem Oberbegriff von Anspruch 1.

Weitere Verfahren zum Sammeln von landwirtschaftlichen Messdaten bei einer landwirtschaftlichen Maschine sind aus den Dokumenten US 2019/120 133 A1, DE 10 2010 031344 A1, US 2016/071223 A1 und US 2017/315555 A1 bekannt

Landwirtschaftliche Arbeitsmaschinen wie Traktoren, können mit diversen Anbaugeräten kombiniert werden. Diese Anbaugeräte werden über eine Geräteschnittstelle an die landwirtschaftliche Arbeitsmaschine angebaut. Vorliegend stehen landwirtschaftliche Gespanne mit einer landwirtschaftlichen Arbeitsmaschine und einem landwirtschaftlichen Anbaugerät im Vordergrund, wobei das landwirtschaftliche Anbaugerät insbesondere ein eigenes Fahrzeug sein kann. Dieses wird vorzugsweise von der landwirtschaftlichen Arbeitsmaschine gezogen.

Derartige Anbaugeräte dienen allgemein der Durchführung einer landwirtschaftlichen Arbeitsaufgabe. Im Vordergrund stehen hier Feldbearbeitungen. Bei diesen Feldbearbeitungen kann es sich beispielsweise um Aussaat- oder Düngevorgänge handeln, um das Auftragen von Pflanzenschutzmittel, Bodenbearbeitungen wie das Pflügen oder Erntevorgänge wie das Mähen. Diesen Feldbearbeitungen ist gemeinsam, dass die Anbaugeräte dabei zumeist auf eine spezifische Arbeitshöhe eingestellt werden. Die Arbeitshöhe kann, beispielsweise beim Pflügen, auch einen negativen Wert annehmen und somit eine Arbeitstiefe sein. Der Erfolg und zum Teil der Energieverbrauch der Feldbearbeitung hängt dabei oft maßgeblich von der Arbeitshöhe ab. Gleichzeitig hängt diese jedoch von diversen Maschinenparametern des Anbaugeräts einer landwirtschaftlichen Arbeitsmaschine ab.

Beim Pflügen beispielsweise ist die Arbeitstiefe zum einen von Parametern abhängig, die je nach Pflug vom Benutzer manuell am Pflug eingestellt werden und zum anderen von Einstellungen der Geräteschnittstelle an der landwirtschaftlichen Arbeitsmaschine. Weiterhin haben auch eine Achslast und ein Reifendruck der landwirtschaftlichen Arbeitsmaschine indirekt über die Reifeneinfederung einen Einfluss auf die Arbeitstiefe des Pflugs. Zwar können moderne Pflüge zum Teil zumindest über hydraulische Zylinder grundsätzlich in der Arbeitstiefe variiert werden, allerdings fehlen die notwendigen Messdaten, um diese Einstellungen gezielt vorzunehmen. Ähnliche Probleme gibt es bei anderen landwirtschaftlichen Anbaugeräten.

In der Praxis wird daher für eine Feldbearbeitung häufig eine Arbeitshöhe eingestellt, die dann konstant bei der Feldbearbeitung gehalten wird. Auch dieses Konstanthalten basiert allerdings auf einer Regelung, die teilweise sehr komplex und teilweise auch ungenau ist. Maschinenparameter der landwirtschaftlichen Arbeitsmaschine wie der Reifendruck werden üblicherweise nicht berücksichtigt. Dabei kommt also nur eine relative Arbeitshöhenmessung zum Einsatz.

Arbeitsqualitätsparameter werden vom Gespann, wenn überhaupt, normalerweise dezentral am Anbaugerät erfasst. Dort werden sie für eine Regelung während der Durchführung der Arbeitsaufgabe verwendet. Eine Nutzung von Arbeitsqualitätsparametern vergangener Arbeitsaufgaben erfolgt jedoch üblicherweise nicht. Hinzu kommt, dass über das Jahr die landwirtschaftliche Arbeitsmaschine mit diversen Anbaugeräten verwendet wird.

Es ist dabei eine Herausforderung den bekannten Stand der Technik zu verbessern.

Der Erfindung liegt das Problem zugrunde, das bekannte Verfahren derart auszugestalten und weiterzubilden, dass die Messdatenerfassung über das Jahr hinweg verbessert wird.

Das obige Problem wird durch die Merkmale des kennzeichnenden Teils von Anspruch 1 gelöst.

Wesentlich ist die grundsätzliche Überlegung, eine Sensoranordnung mit einem Sensor vorzusehen, der in mehrere Kombinationen aus landwirtschaftlicher Arbeitsmaschine und landwirtschaftlichen Anbaugeräten integrierbar ist bzw. integrierbar wird. Durch diese Integration wird es möglich, die über das Jahr gesammelten Daten zu kombinieren und synergetisch zu nutzen.

Im Einzelnen wird vorgeschlagen, dass der Sensor in Kombinationen aus landwirtschaftlicher Arbeitsmaschine und mehreren landwirtschaftlichen Anbaugeräten integrierbar ist bzw. integrierbar wird, dass der Sensor mindestens einen Arbeitsqualitätsparameter des jeweiligen Anbaugerätes betreffende Messdaten aufnimmt und an die Steueranordnung überträgt und dass die Steueranordnung in einer Normierungsroutine aus die unterschiedlichen Anbaugeräte betreffenden Messdaten einen gemeinsamen Datensatz erzeugt.

Anspruch 2 betrifft die anbaugerätespezifische Datenverarbeitung. Demnach kann vorgesehen sein, dass die Messdaten anbaugerätespezifisch ermittelt und/oder verarbeitet werden. So oder so kann daraus ein gemeinsamer Datensatz erzeugt werden, der den Arbeitsqualitätsparameter für unterschiedliche Arbeitsvorgänge umfasst. So werden Messdaten unterschiedlicher Anbaugeräte und Arbeitsvorgänge in einen gemeinsamen Datensatz überführt und können über längere Zeit, beispielsweise eine Saison, beobachtet und verwendet werden.

Die Integration in das landwirtschaftliche Gespann kann gemäß Anspruch 3 durch eine Busanbindung des Sensors erfolgen. Zusätzlich oder alternativ kann der Sensor herstellerseitig an der landwirtschaftlichen Arbeitsmaschine verbaut und insbesondere in einen Maschinenkommunikationsbus der landwirtschaftlichen Arbeitsmaschine integriert sein.

Bei einer Ausgestaltung gemäß Anspruch 4 ist der Sensor ein Arbeitshöhensensor. Die Arbeitshöhe ist bei diversen unterschiedlichen Anbaugeräten ein wichtiger Arbeitsqualitätsparameter. Gleichzeitig kann dieser Arbeitsqualitätsparameter gut bei unterschiedlichen Anbaugeräten mittels desselben Sensors gemessen werden. Insbesondere bei den bodenbearbeitenden Vorgängen ist die Arbeitshöhe beziehungsweise dann Arbeitstiefe einer der zentralen Arbeitsqualitätsparameter mit großem Einfluss auf nachfolgende Arbeitsaufgaben. Die Messung der Arbeitshöhe ermöglicht gleichzeitig auch eine gute Regelung der Arbeitshöhe.

Als Arbeitshöhensensorik kommt eine modulare Sensorik gemäß Anspruch 5 in Frage, die über eine Sensorhalterung an unterschiedlichen Anbaugeräten montierbar ist. Die Sensorhalterung verbleibt dafür vorzugsweise an dem Anbaugerät und nur der Sensor wird an dem jeweiligen Anbaugerät für die Arbeitsaufgabe montiert. Diese modulare Sensorik ermöglicht eine kostengünstige Messung der Arbeitshöhe einer Vielzahl landwirtschaftlicher Anbaugeräte mittels eines oder weniger Sensoren.

Bevorzugte Ausgestaltungen des Sensors gibt Anspruch 6 an. Diese sind im landwirtschaftlichen Bereich, insbesondere zur Messung der Arbeitshöhe, besonders geeignet. Es kann zusätzlich ein weiterer Sensor vorgesehen sein, der eine Vorfeldmessung durchführt. Insbesondere kann so eine Veränderung des Feldes als Arbeitsqualitätsparameter ermittelt werden.

Anspruch 7 gibt bevorzugt mit einem Lidar-Sensor messbare Arbeitsqualitätsparameter an.

Anspruch 8 gibt bevorzugt mit einer 3D-Kamera messbare Arbeitsqualitätsparameter an.

Gemäß Anspruch 9 kann vorgesehen sein, dass die Steueranordnung während einer Arbeitsaufgabe mindestens einen Maschinenparameter der landwirtschaftlichen Arbeitsmaschine und/oder des jeweiligen Anbaugerätes basierend auf den Messdaten steuert oder regelt, vorzugsweise dies während einer anderen Arbeitsaufgabe nicht tut und weiter vorzugsweise der Sensor während noch einer weiteren Arbeitsaufgabe Messdaten aufnimmt, obwohl kein Anbaugerät verwendet wird. Dies zeigt, wie über den Lauf einer Saison Messdaten gesammelt werden können, die eine ganzheitlichere Betrachtung des Feldes ermöglichen.

Bevorzugte Arbeitsqualitätsparameter sind Gegenstand von Anspruch 10. Diese erlauben eine besonders gute Analyse der Feldqualität und entsprechend eine Planung weiterer Arbeitsaufgaben. Die Möglichkeit der Planung einer weiteren Arbeitsaufgabe basierend auf dem gemeinsamen Datensatz ist Gegenstand von Anspruch 11. Anspruch 12 betrifft dann die Steuerung oder Regelung eines Maschinenparameters basierend auf der geplanten Arbeitsaufgabe.

Anspruch 13 betrifft die Normierungsroutine, in der insbesondere GPS-Daten verwendet werden können. Dies ermöglicht eine effiziente, positionsabhängige Speicherung und Nutzung der Messdaten. Dies trägt unter anderem dem Umstand Rechnung, dass auch ein einzelnes Feld keineswegs homogen ist. Senken, feuchte Gebiete, Änderungen der Bodenart und des Bodenzustands, Änderungen der Vegetation und dergleichen können somit berücksichtigt werden.

Nach einer weiteren Lehre gemäß Anspruch 14, der eigenständige Bedeutung zukommt, wird eine Sensoranordnung eingerichtet zur Verwendung in dem vorschlagsgemäßen Verfahren beansprucht.

Auf alle Ausführungen zu dem vorschlagsgemäßen Verfahren darf verwiesen werden.

Im Folgenden wird die Erfindung anhand einer lediglich Ausführungsbeispiele darstellenden Zeichnung näher erläutert. In der Zeichnung zeigt
- Fig. 1: eine landwirtschaftliche Flotte mit der vorschlagsgemäßen Sensoranordnung während der Durchführung des vorschlagsgemäßen Verfahrens und
- Fig. 2: in a) bis d) unterschiedliche Anbaugeräte, mit denen das vorschlagsgemäße Verfahren durchgeführt werden kann.

Die vorschlagsgemäße Lösung lässt sich auf einen weiten Bereich landwirtschaftlicher Arbeitsmaschinen 1, insbesondere selbstfahrender landwirtschaftlicher Arbeitsmaschinen 1, anwenden. Dazu gehören insbesondere Traktoren. Bei dem dargestellten und insoweit bevorzugten Ausführungsbeispiel handelt es sich bei der landwirtschaftlichen Arbeitsmaschine 1 um einen Traktor.

Die Arbeitsmaschine 1 lässt sich über mindestens eine Geräteschnittstelle 2 mit mindestens einem Anbaugerät 3 kombinieren. Bei der Geräteschnittstelle 2 handelt es sich hier ganz allgemein um eine mechanische Kupplung zwischen der Arbeitsmaschine 1 und dem Anbaugerät 3. Bei dem dargestellten und insoweit bevorzugten Ausführungsbeispiel ist die Geräteschnittstelle 2 als Dreipunkt-Kraftheber 4 ausgestaltet, der für die Kopplung mit dem Anbaugerät 3 zwei Unterlenker 5 und einen Oberlenker 6 aufweist. Die Geräteschnittstelle 2 kann als Front- oder Heckkraftheber ausgestaltet sein. Grundsätzlich kann es sich bei der Geräteschnittstelle 2 aber auch um ein Zugpendel handeln. Andere Varianten für die Geräteschnittstelle 2 sind Systeme mit einfacher Zugzapfenkupplung, mit Hitch Haken, mit Kugelkopfkupplung oder dergleichen.

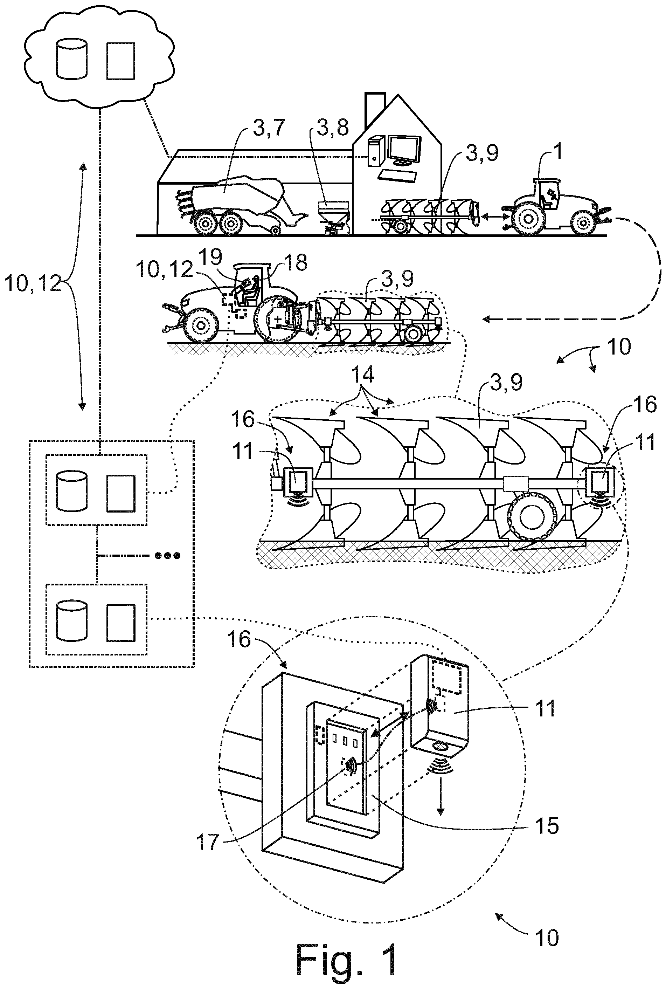

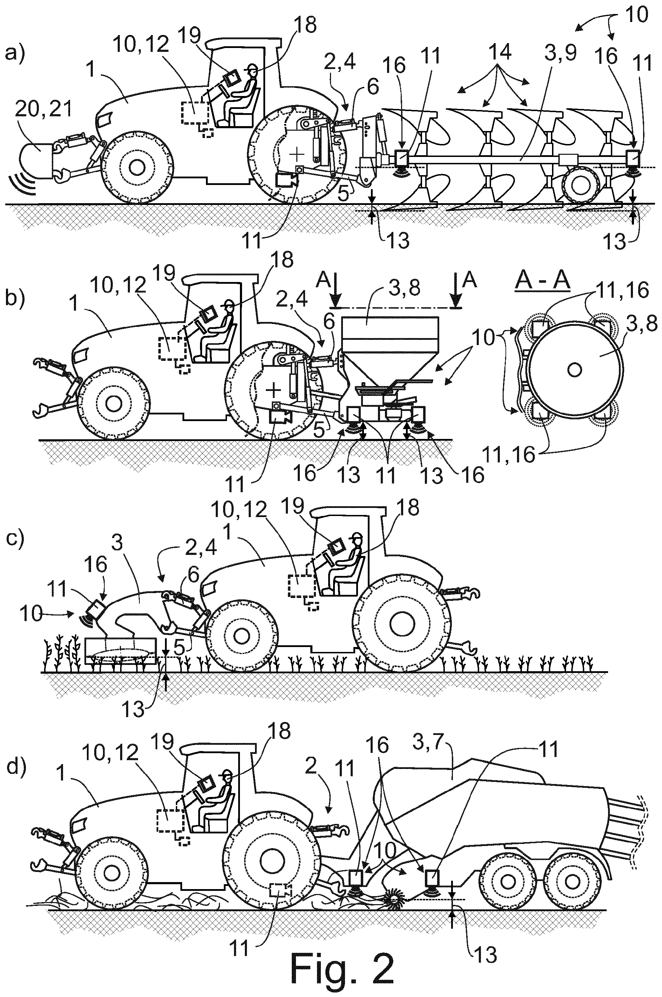

Fig. 1 zeigt mehrere landwirtschaftliche Anbaugeräte 3, die in dem vorschlagsgemäßen Verfahren verwendbar sind, konkret eine Ballenpresse 7, einen Kunstdüngerstreuer 8 und einen Pflug 9. In Fig. 2 sind diese in Aktion dargestellt.

Vorzugsweise sind zumindest einige der Anbaugeräte 3 eigene Fahrzeuge mit mindestens einer eigenen Achse und eigenen Rädern. Zusätzlich oder alternativ kann das Anbaugerät 3 ohne Achse oder Räder ausgestaltet sein und vom Traktor oder einem anderen Anbaugerät 3 getragen werden. Diesbezüglich wird auf die bereits erwähnten Geräteschnittstellen 2 verwiesen.

Das in den Figuren dargestellte und insoweit bevorzugte Ausführungsbeispiel betrifft ein Verfahren zum Sammeln von landwirtschaftlichen Messdaten bei einer landwirtschaftlichen Arbeitsmaschine 1, die zur Feldbearbeitung mit mindestens einem landwirtschaftlichen Anbaugerät 3 kombiniert wird, wobei eine Sensoranordnung 10 vorgesehen ist, die einen Sensor 11 und eine Steueranordnung 12 aufweist.

Die Sensoranordnung 10 kann als solche eigenständig oder zumindest teilweise in die landwirtschaftliche Arbeitsmaschine 1 integriert sein. Insbesondere kann die Steueranordnung 12 der Sensoranordnung 10 beispielsweise eine Steueranordnung 12 der landwirtschaftlichen Arbeitsmaschine 1 sein. Genauso kann diese jedoch auch aus verteilten Recheneinheiten bestehen. Sie kann beispielsweise eine Steuereinheit der landwirtschaftlichen Arbeitsmaschine 1 und eine Cloud-Steuereinheit aufweisen.

Wesentlich ist nun, dass der Sensor 11 in Kombinationen aus landwirtschaftlicher Arbeitsmaschine 1 und mehreren landwirtschaftlichen Anbaugeräten 3 integrierbar ist, dass der Sensor 11 mindestens einen Arbeitsqualitätsparameter des jeweiligen Anbaugerätes 3 betreffende Messdaten aufnimmt und an die Steueranordnung 12 überträgt und dass die Steueranordnung 12 in einer Normierungsroutine aus die unterschiedlichen Anbaugeräte 3 betreffenden Messdaten einen gemeinsamen Datensatz erzeugt.

Die Messdaten werden von dem Sensor 11 an die Steueranordnung 12 übertragen. Die Übertragung der Messdaten von dem Sensor 11 an die Steueranordnung 12 kann grundsätzlich auf beliebige Art und Weise stattfinden. Insbesondere muss der Sensor 11 die Daten nicht aktiv senden, sie können auch ausgelesen werden. Vorzugsweise findet die Übertragung regelmäßig und/oder kontinuierlich statt.

Der Sensor 11 ist in das landwirtschaftliche Gespann aus landwirtschaftlicher Arbeitsmaschine 1 und landwirtschaftlichem Anbaugerät 3 integrierbar. Interessant dabei ist nun, dass der Sensor 11 in mehrere landwirtschaftliche Gespanne mit unterschiedlichen landwirtschaftlichen Anbaugeräten 3 integrierbar ist. Dies kann zum einen durch eine Vollintegration in die landwirtschaftliche Arbeitsmaschine 1 und zum anderen durch eine modulare Sensorik 11, die mit verschiedenen Anbaugeräten 3 verwendet werden kann, erreicht werden. Der Arbeitsqualitätsparameter ist aus den Messdaten ermittelbar und bezieht sich hier und vorzugsweise auf das Feld, insbesondere auf den Boden und/oder den Feldbestand.

Mittels der Normierungsroutine lassen sich hier und vorzugsweise diverse Arbeitsqualitätsparameter aus ganz unterschiedlichen Arbeitsaufgaben zu einem Bodengedächtnis oder Feldgedächtnis als gemeinsamen Datensatz zusammenfügen. Beispielsweise kann eine Arbeitstiefe eines Pflügevorgangs mit einem Arbeitsqualitätsparameter eines anschließenden Aussäens, die Arbeitsqualitätsparameter diverser Dünge- und Pflanzenschutzmaßnahmen und einem Arbeitsqualitätsparameter eines Erntevorgangs kombiniert werden. Dieser Verlauf kann gleichzeitig durch Arbeitsqualitätsparameter vergangener Saisons oder Arbeitsaufgaben planerisch angepasst werden, um mit der Zeit immer mehr Informationen über das Feld zu sammeln und zu nutzen.

Interessant an dem integrierten Sensor 11 ist, dass dieser bestenfalls bei jeder Arbeitsaufgabe Daten sammelt, die miteinander kombiniert werden können. Das kann so weit gehen, dass der Sensor 11 selbst dann Daten sammelt, wenn diese eigentlich für die vorliegende Arbeitsaufgabe gar nicht benötigt werden. Da der Sensor 11 aber vorzugsweise trotzdem vorhanden ist, können diese Messdaten auch gesammelt und genutzt werden. Gleichzeitig können die Messdaten vor Ort während der Durchführung der Arbeitsaufgabe zur Steuerung oder Regelung des landwirtschaftlichen Gespanns verwendet werden. Diese Doppelnutzung des Sensors 11 ist besonders kosteneffizient.

Die Normierungsroutine führt die Messdaten zu dem gemeinsamen Datensatz zusammen. Je nach Typ des Sensors 11 und Art der Messdaten kann die Normierungsroutine aufwändiger oder relativ unaufwändig sein. In einer Ausgestaltung ist vorgesehen, dass sich die Messung des Sensors 11 selbst zwischen den Anbaugeräten 3 nicht oder nur wenig unterscheidet, sodass das Zusammenführen der Messdaten entsprechend einfach ist.

Hier und vorzugsweise ist vorgesehen, dass die Steueranordnung 12 mittels eines anbaugerätespezifischen Kalibrationsdatensatzes aus den Messdaten den Arbeitsqualitätsparameter des jeweiligen Anbaugerätes 3 ermittelt, und/oder, dass die Steueranordnung 12 die Messdaten mittels eines anbaugerätespezifischen Normierungsdatensatz in normierte, insbesondere anbaugeräteunabhängige, Messdaten überführt und zu dem gemeinsamen Datensatz zusammenführt. Zusätzlich ist denkbar, dass die Steueranordnung 12 aus den normierten Messdaten einen gemeinsamen Datensatz erzeugt, der den Arbeitsqualitätsparameter für unterschiedliche bearbeitete Arbeitsaufgaben der landwirtschaftlichen Arbeitsmaschine 1 mit unterschiedlichen Anbaugeräten 3 umfasst.

Ein Beispiel für das Zusammenführen kann anhand der Ebenheit erläutert werden. Beim Pflügen einer Winterfurche soll die Oberfläche möglichst zerklüftet sein. Diese Ebenheit kann dann in einen standardisierten Datensatz überführt werden und mit der Information, dass ein Pflügen einer Winterfurche durchgeführt wurde, abgespeichert werden. Bei einer Saatbettbereitung sollte die Oberfläche hingegen eben sein. Dafür wird gegebenenfalls ein anderes Anbaugerät 3 verwendet. Auch diese Ebenheit kann abgespeichert werden. Damit kann anschließend eine statistische Auswertung der verschiedenen Bodenbearbeitungen erfolgen.

Der anbaugerätespezifische Kalibrationsdatensatz kann beispielsweise bei der noch zu erläuternden modularen Sensorik 11 eine Position des Sensors 11 umfassen und/oder den Typ des Anbaugerätes 3 und/oder dessen Effekte auf den Boden und dergleichen. Der Kalibrationsdatensatz betrifft dabei diejenigen Daten, die notwendig sind, um generell aus den Messdaten den Arbeitsqualitätsparameter zu ermitteln.

Der anbaugerätespezifische Normierungsdatensatz betrifft diejenigen Daten, die notwendig sind, um aus den Messdaten und/oder dem Arbeitsqualitätsparameter den gemeinsamen Datensatz zu erzeugen. Dies kann beispielsweise GPS-Daten, Zeitstempel, aber auch diverse Daten zum Anbaugerät 3 betreffen. Dabei sei darauf hingewiesen, dass ein Zeitstempel alleine noch keine Normierung ausmacht. Vielmehr ist eine irgendwie geartete Umwandlung der Daten notwendig. Vorzugsweise ist vorgesehen, dass insbesondere Messdaten von Anbaugeräten 3 desselben Typs aber beispielsweise unterschiedlicher Hersteller oder Baureihen derart in den gemeinsamen Datensatz übernommen werden, dass ihre Darstellung sich nicht wesentlich unterscheidet. Der Arbeitsqualitätsparameter kann dabei auf einer tieferen Ebene angesiedelt sein und beispielsweise eine Arbeitstiefe sein, kann jedoch auch abstrakter, insbesondere als Bodenqualität und/oder Feldqualität und/oder Feldbestandsqualität eine Gesamtqualität abbilden.

Weiter ist hier und vorzugsweise vorgesehen, dass der Sensor 11 mit einem Bus, insbesondere einem ISOBUS- oder CAN Bus, der landwirtschaftlichen Arbeitsmaschine 1 verbunden ist, und/oder, dass der Sensor 11 herstellerseitig, insbesondere fest oder mit einer proprietären Schnittstelle, an der landwirtschaftlichen Arbeitsmaschine 1 verbaut und insbesondere in einen Maschinenkommunikationsbus der landwirtschaftlichen Arbeitsmaschine 1 integriert ist, vorzugsweise, dass der Sensor 11 unter dem Traktor verbaut ist. Bei optischen Verfahren wird allerdings aufgrund der hohen Staubentwicklung häufig eine hohe Position des Sensors bevorzugt.

Ein Beispiel eines am Traktor fest verbauten Sensors 11 zeigt Fig. 2a), b), d).

Wenn der Sensor 11 fest verbaut ist, hat dies insbesondere die Vorteile, dass dieser auch an schlecht zugänglichen Stellen befestigt werden kann, da auf eine Tauschbarkeit im Sinne der noch zu erläuternden modularen Sensorik 11 keine Rücksicht genommen werden muss. Es führt auch dazu, dass der Sensor 11 im Grunde durchgehend verwendet werden kann und der gemeinsame Datensatz entsprechend vollständig wird. Weiterhin kann die Positionierung des Sensors 11 bei Bedarf zum Beispiel an eine Staubentwicklung angepasst sein, wieder ohne dass Rücksicht auf die Erreichbarkeit des Sensors 11 genommen werden muss.

Weiter ist hier und vorzugsweise vorgesehen, dass der Sensor 11 ein Arbeitshöhensensor ist, vorzugsweise, dass der Arbeitsqualitätsparameter eine absolute Arbeitshöhe 13, insbesondere eine absolute Arbeitstiefe, ist, weiter vorzugsweise, dass die Steueranordnung 12 die Arbeitshöhe 13 auf Basis der Messdaten regelt. Alternativ kann der Sensor 11, wie noch erläutert wird, bevorzugt zum Beispiel ein optischer Sensor wie ein Lidar-Sensor, insbesondere für die Detektion der Ebenheit des Bodens, oder eine 3D-Kamera, insbesondere für die Detektion der Einmischung organischer Materialien, sein.

Unter dem Begriff "absolut" wird nicht zwingend eine hochgenaue Messung verstanden, sondern allgemeine eine Messung relativ zum Boden. Dabei ist grundsätzlich denkbar, dass die Messung relativ zu einem Bauteil erfolgt, dessen Höhe relativ zum Boden wiederum bekannt ist, vorzugsweise wird die absolute Arbeitshöhe 13 jedoch direkt relativ zum Boden gemessen. Es kann sich auch um eine Arbeitstiefe handeln, wenn das Anbaugerät 3 in den Boden eingreift. Grundsätzlich betrifft die Arbeitshöhe 13 ein Bauteil des landwirtschaftlichen Anbaugerätes 3, das zur Feldbearbeitung dient. Diese Feldbearbeitung kann allerdings auch eine Aussaat oder dergleichen sein. Beispielsweise betrifft die absolute Arbeitshöhe 13 also den Abstand einer Pflugschar 14 zum Boden, in diesem Fall dann zumeist als Arbeitstiefe, den Abstand eines Auslasses eines Düngerstreuers oder Spritzgerätes zum Boden oder dergleichen. Im Fokus eines besonders bevorzugten Ausführungsbeispiels stehen hier die Bodenbearbeitungsgeräte, weshalb die Arbeitshöhe 13 vorzugsweise eine Arbeitstiefe ist.

Weiter ist hier und vorzugsweise vorgesehen, dass der Sensor 11 mittels der mindestens einen Sensorhalterung 15 jeweils an einer Montageposition 16 an unterschiedlichen Anbaugeräten 3 reversibel montiert wird, dass die Sensorhalterung 15 vom Sensor 11 getrennt an den unterschiedlichen Anbaugeräten 3 montierbar ist und der Sensor 11 reversibel an der Sensorhalterung 15 montierbar ist, dass der Sensor 11 im montierten Zustand eine Arbeitshöhe 13 des Anbaugeräts 3 betreffende Messdaten aufnimmt und an die Steueranordnung 12 überträgt und dass die Steueranordnung 12 aus einem montagepositionsspezifischen Kalibrationsdatensatz die Arbeitshöhe 13 des jeweiligen Anbaugerätes 3 ermittelt.

Der montagepositionsspezifische Kalibrationsdatensatz kann, wie noch erläutert wird, grundsätzlich in einem beliebigen Speicher hinterlegt sein, neu erstellt werden oder der Steueranordnung 12 anderweitig zur Verfügung stehen.

Eine vorteilhafte Anwendung der modularen Sensorik 11 betrifft auch die Messung der Arbeitshöhe 13 bei einem Anbaugerät 3, das keine eigene Elektronik aufweist. Wie sich im Folgenden noch ergibt, kann die Sensoranordnung 10 insofern autark von dem Anbaugerät 3 sein. Alternativ kann vorgesehen sein, dass der Sensor 11 nicht mit dem Anbaugerät 3 kommuniziert. Genauso kann jedoch vorgesehen sein, dass der Sensor 11 in eine Elektronik des Anbaugerätes 3 integriert wird oder mit dieser kommuniziert. Auch bei Anbaugeräten 3 mit Elektronik kann jedoch vorgesehen sein, dass der Sensor 11 nicht direkt mit dem Anbaugerät 3 kommuniziert. Bevorzugt ist, dass die Sensoranordnung 10 mit Anbaugeräten 3 mit und ohne Elektronik verwendbar ist. Insgesamt kann sogar vorgesehen sein, dass die Ermittlung der Arbeitshöhe 13, abgesehen von der Kalibration selbst, vollständig unabhängig von dem landwirtschaftlichen Anbaugerät 3 ist.

Vorzugsweise ist es so, dass die montagepositionsspezifischen Kalibrationsdatensätze eine Referenzhöhe und/oder eine Ausrichtung des Sensors 11 im montierten Zustand an der jeweiligen Montageposition 16 und/oder eine Lokalisierung der Montageposition 16 relativ zum Anbaugerät 3 umfassen.

Die Referenzhöhe kann aus einer noch zu erläuternden Kalibrationsroutine stammen und betrifft eine Höhe der Montageposition 16 des Sensors 11 in einem Referenzzustand, vorzugsweise bei einer bekannten Arbeitshöhe 13. Die Ausrichtung des Sensors 11 kann beispielsweise eine Verkippung des Sensors 11 sein. Damit kann berücksichtigt sein, dass der Sensor 11 gegebenenfalls nicht den kürzesten Abstand zum Boden misst. Die Lokalisierung der Montageposition 16 relativ zum Anbaugerät 3 kann aus einer Gruppe von vorgegebenen Montagepositionen 16 gewählt sein oder anderweitig bestimmt werden. Fig. 1 beispielsweise stellt zwei Montagepositionen 16 an einem Pflug 9 dar. Auch Fig. 2 zeigt mehrere mögliche Montagepositionen 16 an unterschiedlichen Anbaugeräten 3. Wie noch erläutert wird, ergibt sich auch die Möglichkeit, pro Anbaugerät 3 mehrere Arbeitshöhen 13 zu messen und so beispielsweise eine Neigung des Anbaugerätes 3 zu erfassen. Dafür kann die Lokalisierung der Montageposition 16 eines oder mehrerer Sensoren 11 notwendig sein.

Es kann vorgesehen sein, dass die montagepositionsspezifischen Kalibrationsdatensätze in einem Speicher der Steueranordnung 12 hinterlegt sind. Dieser Speicher ist hier und vorzugsweise ein lokaler Speicher der landwirtschaftlichen Arbeitsmaschine 1. Grundsätzlich kommt jedoch auch ein Cloud-Speicher oder dergleichen in Betracht. In dem Speicher können Kalibrationsdatensätze betreffend Montagepositionen 16 an mindestens zwei, vorzugsweise mindestens drei, unterschiedlichen Typen von Anbaugeräten 3 hinterlegt sein.

Hier und vorzugsweise umfassen die Anbaugeräte 3 unterschiedliche Typen von Anbaugeräten 3, für die die Steueranordnung 12 jeweils eine Arbeitshöhe 13 ermittelt. Die unterschiedlichen Typen von Anbaugeräten 3 umfassen vorzugsweise mindestens einen Typ Bodenbearbeitungsgerät, weiter vorzugsweise mindestens zwei Typen Bodenbearbeitungsgeräte. Die Typen Bodenbearbeitungsgeräte umfassen vorzugsweise einen Pflug 9 und/oder einen Grubber und/oder eine Egge. Die unterschiedliche Typen von Anbaugeräten 3 umfassen vorzugsweise einen Kunstdüngerstreuer 8 und/oder eine Sämaschine, insbesondere eine Säschar, und/oder ein Mähwerk und/oder eine Pickup und/oder ein Anbaugerät 3 mit einer Pickup, insbesondere eine Ballenpresse 7 oder einen Ladewagen.

Wie im unteren Bereich von Fig. 1 gezeigt, ist hier und vorzugsweise vorgesehen, dass die Sensorhalterung 15 vom Sensor 11 getrennt an den unterschiedlichen Anbaugeräten 3 montierbar ist. Der Sensor 11 ist dann reversibel an der Sensorhalterung 15 montierbar. Es kann grundsätzlich vorgesehen sein, dass die Sensorhalterung 15 ein relativ günstiges Massenbauteil ist, während der Sensor 11 selbst relativ teuer ist. Das vorschlagsgemäße Verfahren ermöglicht die Wiederverwendung des teuren Sensors 11.

Aus Komfortgründen kann jedoch vorgesehen sein, dass die Sensorhalterung 15 an dem Anbaugerät 3 verbleibt. Dies hat zum einen im Rahmen der noch zu erläuternden Kalibrationsroutine deutliche Vorteile, ermöglicht jedoch zum anderen auch, die Sensorhalterung 15 stabil und aufwändiger zu montieren, während die Montage des Sensors 11 an der Sensorhalterung 15 selbst vorzugsweise relativ einfach ist. Dies ermöglicht auch die Wiederverwendung derselben Montageposition 16 bei erneutem Anbringen des Sensors 11. Entsprechend kann der montagepositionsspezifische Kalibrationsdatensatz auch der Sensorhalterung 15 an der entsprechenden Montageposition 16 zugeordnet sein. Um diese Zuordnung nun abzubilden, kann vorgesehen sein, dass die Sensorhalterung 15 ein Identifikationsmerkmal 17 aufweist.

Das Identifikationsmerkmal 17 kann von der Sensorhalterung 15 an die Steueranordnung 12 übertragen werden. In manchen Ausführungsbeispielen weist diese Sensorhalterung 15 jedoch keine eigene Elektronik auf. Insbesondere deshalb kann auch vorgesehen sein, dass der Sensor 11, insbesondere im montierten Zustand, das Identifikationsmerkmal 17 ausliest und an die Steueranordnung 12 überträgt. Vorzugsweise weist die Sensorhalterung 15 einen NFC-Tag auf. Der Sensor 11 kann dann einen NFC-Leser aufweisen, mittels dessen der Sensor 11 das Identifikationsmerkmal 17 der Sensorhalterung 15 ausliest und an die Steueranordnung 12 überträgt. Alternativ kann auch vorgesehen sein, dass der Benutzer 18 das Identifikationsmerkmal 17 über ein Eingabegerät, insbesondere ein Smartphone oder ein Terminal 19, eingeben oder mit dem Smartphone auslesen kann. Das Eingabegerät kommuniziert dann mit der Steueranordnung 12 oder ist Teil der Steueranordnung 12. Das Identifikationsmerkmal 17 kann somit insbesondere auch ein QR-Code sein, den der Benutzer 18 beispielsweise in einer dedizierten App ausliest. All diese Möglichkeiten erlauben eine schnelle Montage des Sensors 11, die direkt zur Nutzbarkeit des Sensors 11 zur Ermittlung der Arbeitshöhe 13 führt. Statt eines Smartphones kann auch ein Tablet, ein Laptop, eine Smartwatch oder dergleichen verwendet werden

Zusätzlich oder alternativ kann vorgesehen sein, dass ein Benutzer 18 den montagepositionsspezifischen Kalibrationsdatensatz an einer Eingabeeinheit, vorzugsweise einer Eingabeeinheit einer landwirtschaftlichen Arbeitsmaschine 1, die mit der Steueranordnung 12 kommuniziert, auswählt, oder, dass die Steueranordnung 12 den montagepositionsspezifischen Kalibrationsdatensatz auf Basis des Identifikationsmerkmal 17 automatisch auswählt.

Weiter ist hier und vorzugsweise vorgesehen, dass die Steueranordnung 12 eine Kalibrationsroutine durchführt, in der die Steueranordnung 12 einen montagepositionsspezifischen Kalibrationsdatensatz erzeugt und vorzugsweise in dem Speicher abspeichert.

Diese Kalibrationsroutine wird im Folgenden näher erläutert. Vorzugsweise ist vorgesehen, dass in der Kalibrationsroutine die Steueranordnung 12 eine Referenzhöhe und/oder eine Ausrichtung des Sensors 11 im montierten Zustand an der jeweiligen Montageposition 16 und/oder eine Lokalisierung der Montageposition 16 relativ zum Anbaugerät 3 in dem montagepositionsspezifischen Kalibrationsdatensatz abspeichert.

Die Kalibrationsroutine wird hier und vorzugsweise auf ebenem Grund durchgeführt. Dabei kann die Steueranordnung 12 dem Benutzer 18 mitteilen, dass er die landwirtschaftliche Arbeitsmaschine 1 und/oder das Anbaugerät 3 auf ebenem Grund abstellen soll und/oder annehmen, dass dies geschehen ist. Weiter ist vorzugsweise vorgesehen, dass das Anbaugerät 3 eine Referenzhöhe einnimmt. Beim Pflug 9 kann die Referenzhöhe beispielsweise bei einer Arbeitshöhe 13 von null festgelegt werden, wenn die Pflugscharen 14 auf dem Boden abgestellt sind. Bei einer Säeinrichtung beispielsweise kann es jedoch auch vorkommen, dass die niedrigste, einstellbare Höhe und eine übliche Arbeitshöhe 13 zu weit auseinander liegen, um den Sensor 11 so zu kalibrieren und während der Nutzung dennoch innerhalb der Spezifikation des Sensors 11 zu bleiben. Daher kann genauso vorgesehen sein, dass der Benutzer 18 die Referenzhöhe eingeben oder anderweitig bestimmen muss.

Vorzugsweise misst die Steueranordnung 12 mittels des Sensors 11 in der Kalibrationsroutine einen Abstand des Sensors 11 zum Boden und speichert diesen als Referenzhöhe ab. Besonders interessant daran ist, dass die Montageposition 16, die von der Steueranordnung 12 vorgegeben werden kann, vom Benutzer 18, insbesondere in Höhenrichtung, nicht genau eingehalten werden muss, da sie sich bei der Ermittlung der Arbeitshöhe 13 aus der Referenzhöhe herauskürzt. Auch in andere Richtungen kommt es aufgrund der in der Landwirtschaft vorherrschenden Toleranzen zumeist nicht auf eine hohe Präzision an.

Sofern das Anbaugerät 3 eigene Einstellmöglichkeiten der Arbeitshöhe 13 aufweist, kann vorgesehen sein, dass die während der Kalibrationsroutine vorliegenden Einstellungen ebenfalls in dem montagepositionsspezifischen Kalibrationsdatensatz abgespeichert werden und Änderungen dieser Einstellungen können zu einer Warnung an den Benutzer 18 führen oder gegebenenfalls mittels eines Modells des Anbaugerätes 3 bei der Ermittlung der Arbeitshöhe 13 berücksichtigt werden.

Weiter ist hier und vorzugsweise vorgesehen, dass die Steueranordnung 12 einen Benutzer 18 mittels einer Ausgabeeinheit in einem natürlichsprachigen Dialog durch die Kalibrationsroutine leitet, vorzugsweise, dass die Steueranordnung 12 dem Benutzer 18 eine Montageposition 16 vorgibt oder der Benutzer 18 die Montageposition 16, vorzugsweise per Spracheingabe, an die Steueranordnung 12 übermittelt, und/oder, dass die Steueranordnung 12 dem Benutzer 18 eine Einstellung einer Arbeitshöhe 13 des Anbaugerätes 3 vorgibt oder der Benutzer 18 die Einstellung einer Arbeitshöhe 13, vorzugsweise per Spracheingabe, an die Steueranordnung 12 übermittelt, und/oder, dass die Steueranordnung 12 dem Benutzer 18 vorgibt, die landwirtschaftliche Arbeitsmaschine 1 und/oder das Anbaugerät 3 auf ebenem Grund abzustellen.

Der Dialog kann mittels eines Sprachausgabegerätes und/oder Spracheingabegerätes der landwirtschaftlichen Arbeitsmaschine 1 und/oder eines Smartphones durchgeführt werden. Genauso kann jedoch auch ein Terminal 19 der landwirtschaftlichen Arbeitsmaschine 1 und/oder das Smartphone ohne Spracheingabe und/oder -ausgabe verwendet werden.

Hier und vorzugsweise ist vorgesehen, dass die landwirtschaftliche Arbeitsmaschine 1 und/oder das Anbaugerät 3 während der Kalibrationsroutine auf ebenem Untergrund steht, dass der Benutzer 18 die Sensorhalterung 15 an einer Montageposition 16 an einem landwirtschaftlichen Anbaugerät 3 montiert und den Sensor 11 mit der Sensorhalterung 15 verbindet und dass die Steueranordnung 12 eine Kalibrationsroutine durchführt, in der die Steueranordnung 12 eine Referenzhöhe ermittelt und einen montagepositionsspezifischen Kalibrationsdatensatz erzeugt und vorzugsweise in dem Speicher hinterlegt.

Die Ausgabeeinheit kann das Terminal 19 oder das Smartphone sein und/oder das Sprachausgabegerät aufweisen.

Es kann vorgesehen sein, dass der Sensor 11 form- und/oder kraftschlüssig an der Sensorhalterung 15 montierbar ist, vorzugsweise, dass der Sensor 11 mittels einer Schnellspanneinrichtung und/oder mittels einer oder mehrerer Schrauben und/oder magnetisch an der Sensorhalterung 15 montierbar ist und/oder in die Sensorhalterung 15 einclipsbar ist. Bevorzugt ist der Sensor 11 mit handelsüblichem Werkzeug oder ganz ohne Werkzeug an der Sensorhalterung 15 montierbar.

Weiter ist hier und vorzugsweise vorgesehen, dass die Sensorhalterung 15 eine Batterie und/oder eine elektrische Verbindungseinheit, insbesondere ein Kabel oder eine Antenne, zur Verbindung mit der Steueranordnung 12 und/oder zur Energieübertragung von einer landwirtschaftlichen Arbeitsmaschine 1 an den Sensor 11, aufweist, vorzugsweise, dass die elektrische Verbindungseinheit eine Busanbindung, insbesondere eine ISOBUS- oder CAN Busanbindung, aufweist.

Mittels einer derart ausgestalteten Sensorhalterung 15 kann insbesondere der Sensor 11 mit Energie versorgt werden. Gleichzeitig oder alternativ kann die Sensorhalterung 15 so genutzt werden, um die Daten von dem Sensor 11 an die Steueranordnung 12 zu übertragen. Besonders interessant ist das, wenn die Steueranordnung 12 Teil der landwirtschaftlichen Arbeitsmaschine 1 ist oder die Verbindung zur Steueranordnung 12 über die landwirtschaftliche Arbeitsmaschine 1 läuft. Weist die Sensorhalterung 15 ein Kabel auf, das gegebenenfalls mit einem Bus der landwirtschaftlichen Arbeitsmaschine 1 verbindbar ist, und verbleibt die Sensorhalterung 15 an dem landwirtschaftlichen Anbaugerät 3, muss die Verkabelung nur einmal vorgenommen werden. Damit wird das "plug and play"-Konzept der Sensoranordnung 10 konsequent weitergedacht. Die Batterie kann selbstverständlich alternativ ein Akku sein. Genauso kann der Sensor 11 auch eine eigene Batterie oder einen eigenen Akku aufweisen. Insbesondere ist auch denkbar, dass die Sensorhalterung 15 keinerlei Elektronik aufweist, wobei der NFC-Tag nicht als Elektronik zählt. Sofern das Anbaugerät 3 über eine eigene Energieversorgung verfügt, die gegebenenfalls von der landwirtschaftlichen Arbeitsmaschine 1 gespeist wird, kann der Sensor 11, insbesondere über die Sensorhalterung 15, auch mit dieser verbunden werden.

Es kann vorgesehen sein, dass die Steueranordnung 12 die Arbeitshöhe 13 zusätzlich aus einem anbaugerätespezifischen Kalibrationsdatensatz ermittelt und der anbaugerätespezifische Kalibrationsdatensatz eine Kinematik des jeweiligen Anbaugerätes 3 umfasst, und/oder, dass die Steueranordnung 12 die Arbeitshöhe 13 zusätzlich aus einem Kopplungsdatensatz ermittelt und der Kopplungsdatensatz Maschinenparameter einer Geräteschnittstelle 2 zwischen der landwirtschaftlichen Arbeitsmaschine 1 und dem jeweiligen Anbaugerät 3 umfasst, vorzugsweise, dass der Kopplungsdatensatz Maschinenparameter eines Dreipunkt-Krafthebers 4 umfasst.

Mittels des anbaugerätespezifischen Kalibrationsdatensatzes und Kopplungsdatensatzes kann beispielsweise über eine Achstransformation mit Hilfe der Kinematik des Anbaugerätes 3 oder über bekannte Maschinenparameter der Geräteschnittstelle 2 die Anzahl an notwendigen Sensoren 11 zur Ermittlung mehrerer Arbeitshöhen 13 reduziert werden. Auch die Ermittlung einer einzelnen Arbeitshöhe 13 kann so gegebenenfalls verifiziert oder genauer vorgenommen werden. In einem bevorzugten Ausführungsbeispiel kann allerdings mindestens eine Arbeitshöhe 13 ohne Berücksichtigung der Maschinenparameter der Geräteschnittstelle 2 ermittelt werden.

Grundsätzlich kann der anbaugerätespezifische Kalibrationsdatensatz in dem montagepositionsspezifischen Kalibrationsdatensatz enthalten sein oder andersrum. Der Kopplungsdatensatz kann anbaugerätespezifisch sein, muss dies jedoch nicht. Beispielsweise kann dieser Längen von Hydraulikzylindern der Geräteschnittstelle 2 umfassen. Allgemein sind unter Maschinenparametern sämtliche Einstellungen, zugehörige Sensormesswerte und dergleichen zu verstehen. Hier und vorzugsweise betreffen die Maschinenparameter zumindest teilweise Maschinenparameter, die einen direkten Einfluss auf die Arbeitshöhe 13, die ermittelt werden soll, haben.

Weiter ist hier und vorzugsweise vorgesehen, dass der Sensor 11 ein Abstandssensor ist, und/oder, dass der Sensor 11 ein optischer Sensor und/oder ein Radar-Sensor und/oder ein Lidar-Sensor und/oder ein Ultraschall-Sensor und/oder ein NIR-Sensor ist und dass der Sensor 11 die den Arbeitsqualitätsparameter betreffenden Messdaten während der Durchführung der Feldbearbeitung und/oder nach der Durchführung der Feldbearbeitung misst. Vorzugsweise ist dabei vorgesehen, dass der Sensor 11 oder ein weiterer Sensor 20 einen Feldparameter betreffende Messdaten im Vorfeld misst. Es kann auch vorgesehen sein, dass die Steueranordnung 12 den Arbeitsqualitätsparameter aus den Messdaten des Sensors 11 und des weiteren Sensors 20 ermittelt. Zur Messung der Vorfelddaten kann ein Vorfeldsensor 21 vorgesehen sein.

Sofern mehrere Sensoren 11 vorhanden sind, können die Ausführungen zu einem Sensor 11 für die anderen Sensoren 11 entsprechend gelten. Genauso können jedoch auch unterschiedliche Ausgestaltungen des beschriebenen Sensors 11 kombiniert werden.

Im Vorfeld werden vorzugsweise Terraineigenschaften, verbleibende Biomasse auf dem Feld, eine Feuchtigkeit, eine Art der Vegetation oder eine Eigenschaft der Vegetation, eine Bodenart, eine Kompaktierung oder dergleichen gemessen. Hinter der landwirtschaftlichen Arbeitsmaschine 1, insbesondere hinter der Feldbearbeitung, kann eine Kompaktierung, eine Bodenebenheit, eine Vermischung und dergleichen gemessen werden. Insbesondere während der Feldbearbeitung kann eine Arbeitstiefe gemessen werden.

Weiterhin ist möglich, dass der Sensor 11 ein Lidar-Sensor ist, vorzugsweise, dass der Arbeitsqualitätsparameter eine Krümelung und/oder Einebnung einer Saatbettbereitung und/oder eine Vorderfurchenbreite und/oder ein Pflugbild 9 beim Pflügen und/oder eine Einebnung beim Grubbern und/oder ein Ergebnis der Feldbearbeitung von Planierschienen und/oder Randblech einer Kreiselegge ist.

Weiter ist hier und vorzugsweise vorgesehen, dass der Sensor 11 eine 3D Kamera ist, vorzugsweise, dass der Arbeitsqualitätsparameter eine Einmischung beim Grubbern und/oder ein Seitenzug beim Pflug 9 oder bei der Scheibenegge ist und/oder eine Genauigkeit des Anschlussfahrens, insbesondere beim Fahren an Steigungen, ist.

Eine Kamera, insbesondere die 3D-Kamera, kann mit gegebenenfalls bereits vorhandenen Kameras in der Front und/oder an den Seiten der landwirtschaftlichen Arbeitsmaschine 1 kombiniert werden, um beispielsweise eine Rundummessung vorzunehmen.

Es kann vorgesehen sein, dass die Steueranordnung 12 während der Durchführung einer Arbeitsaufgabe mindestens einen Maschinenparameter der landwirtschaftlichen Arbeitsmaschine 1 und/oder des jeweiligen Anbaugerätes 3 basierend auf den Messdaten steuert oder regelt und aus diesen und weiteren Messdaten den gemeinsamen Datensatz erzeugt. Vorzugsweise ist dabei vorgesehen, dass die Steueranordnung 12 während der Durchführung einer anderen Arbeitsaufgabe die Messdaten nicht zur Steuerung oder Regelung der landwirtschaftlichen Arbeitsmaschine 1 und/oder des jeweiligen Anbaugerätes 3 verwendet und aus diesen und weiteren Messdaten den gemeinsamen Datensatz erzeugt. Weiter vorzugsweise kann vorgesehen sein, dass der Sensor 11 während der Durchführung noch einer anderen Arbeitsaufgabe, bei der kein Anbaugerät 3 verwendet wird, Messdaten aufnimmt und die Steueranordnung 12 aus diesen und weiteren Messdaten den gemeinsamen Datensatz erzeugt.

Damit wird im Wesentlichen die Möglichkeit abgebildet, Messdaten ganz unterschiedlicher Arbeitsaufgaben, insbesondere auch dann, wenn diese für die Arbeitsaufgabe gar nicht benötigt werden, zu erfassen. Denkbar ist auch, die beschriebene modulare Sensorik 11 zwischenzeitlich an der landwirtschaftlichen Arbeitsmaschine 1 anzubringen.

Weiter ist hier und vorzugsweise vorgesehen, dass der mindestens eine Arbeitsqualitätsparameter eine Arbeitstiefe betrifft, und/oder, dass der mindestens eine Arbeitsqualitätsparameter eine Bodenfeuchte und/oder eine Rückverfestigung und/oder eine Durchmischung des Bodens und/oder von Pflanzenresten und/oder eine Bodenzusammensetzung betrifft.

Zusätzlich oder alternativ kann vorgesehen sein, dass die Steueranordnung 12 die Durchführung einer Arbeitsaufgabe basierend auf dem gemeinsamen Datensatz plant, vorzugsweise, dass die geplante Arbeitsaufgabe eine Bodenbearbeitung, insbesondere ein Pflügen, und/oder ein Düngevorgang und/oder ein Spritzvorgang und/oder ein Wässerungsvorgang und/oder ein Bestandsführungsvorgang ist.

Wie bereits erwähnt bietet der gemeinsame Datensatz ganz neue Möglichkeiten bei der Planung von Arbeitsaufgaben durch die höhere Verfügbarkeit von Daten. Hinzu kommt, dass die Umsetzung der Planung direkt vor Ort bewertet und in die Regelung des landwirtschaftlichen Gespanns mit einbezogen werden kann. Damit kann eine kurzfristige und eine langfristige Bewertung der Bearbeitungsstrategie erfolgen. Die gesammelten Daten können neben der Regelung auch als Zielgrößen für eine allgemeinere Arbeitsgeräte-Tiefenführung und/oder eine Auflagedruckregelung und/oder eine Fahrgeschwindigkeit als Einstellung und dergleichen genutzt werden.

Es kann auch vorgesehen sein, dass der Abstandssensor zur Überwachung von Bestandshöhen, insbesondere eines Aufwuchsverhaltens, genutzt wird. Diese Nutzung ist vorzugsweise zu einem Zeitpunkt vorgesehen, zu dem der Abstandssensor nicht zur Ermittlung der Arbeitshöhe 13 verwendet wird.

Weiter ist hier und vorzugsweise vorgesehen, dass die Steueranordnung 12 mindestens einen Maschinenparameter der landwirtschaftlichen Arbeitsmaschine 1 und/oder des Anbaugerätes 3, insbesondere eine Arbeitshöhe 13 des Anbaugerätes 3, basierend auf der geplanten Arbeitsaufgabe und vorzugsweise den den Arbeitsqualitätsparameter betreffenden Messdaten steuert oder regelt.

Weiter ist hier und vorzugsweise vorgesehen, dass die Steueranordnung 12 in der Normierungsroutine die Messdaten mit einer Position verknüpft, und/oder, dass die Steueranordnung 12, zumindest teilweise, insbesondere vollständig, in der landwirtschaftlichen Arbeitsmaschine 1 angeordnet ist, vorzugsweise, dass die Steueranordnung 12 Positionsdaten eines Positionssensors, insbesondere GPS-Sensors, der landwirtschaftlichen Arbeitsmaschine 1 in der Normierungsroutine mit den Messdaten verknüpft.

Beansprucht wird außerdem gemäß einer weiteren Lehre, der eigenständige Bedeutung zukommt, eine Sensoranordnung 10 eingerichtet zur Verwendung in dem vorschlagsgemäßen Verfahren.

### Bezugszeichenliste

- 1: landwirtschaftliche Arbeitsmaschine
- 2: Geräteschnittstelle
- 3: landwirtschaftliches Anbaugerät
- 4: Dreipunkt-Kraftheber
- 5: Unterlenker
- 6: Oberlenker
- 7: Ballenpresse
- 8: Kunstdüngerstreuer
- 9: Pflug
- 10: Sensoranordnung
- 11: Sensor
- 12: Steueranordnung
- 13: Arbeitshöhe
- 14: Pflugschar
- 15: Sensorhalterung
- 16: Montageposition
- 17: Identifikationsmerkmal
- 18: Benutzer
- 19: Terminal
- 20: weiterer Sensor
- 21: Vorfeldsensor

## Patentansprüche

1. Verfahren zum Sammeln von landwirtschaftlichen Messdaten bei einer landwirtschaftlichen Arbeitsmaschine (1), die zur Feldbearbeitung mit mindestens einem landwirtschaftlichen Anbaugerät (3) kombiniert wird,
wobei eine Sensoranordnung (10) vorgesehen ist, die einen Sensor (11) und eine Steueranordnung (12) aufweist,
**dadurch gekennzeichnet,**
**dass** der Sensor (11) in Kombinationen aus landwirtschaftlicher Arbeitsmaschine (1) und mehreren landwirtschaftlichen Anbaugeräten (3) integriert wird, wobei der Sensor (11) mindestens einen Arbeitsqualitätsparameter des jeweiligen Anbaugerätes (3) betreffende Messdaten aufnimmt und an die Steueranordnung (12) überträgt und wobei die Steueranordnung (12) in einer Normierungsroutine aus die unterschiedlichen Anbaugeräte (3) betreffenden Messdaten einen gemeinsamen Datensatz erzeugt.

2. Verfahren nach Anspruch 1, **dadurch gekennzeichnet, dass** die Steueranordnung (12) mittels eines anbaugerätespezifischen Kalibrationsdatensatzes aus den Messdaten den Arbeitsqualitätsparameter des jeweiligen Anbaugerätes (3) ermittelt, und/oder, dass die Steueranordnung (12) die Messdaten mittels eines anbaugerätespezifischen Normierungsdatensatz in normierte, insbesondere anbaugeräteunabhängige, Messdaten überführt und zu dem gemeinsamen Datensatz zusammenführt, vorzugsweise, dass die Steueranordnung (12) aus den normierten Messdaten einen gemeinsamen Datensatz erzeugt, der den Arbeitsqualitätsparameter für unterschiedliche bearbeitete Arbeitsaufgaben der landwirtschaftlichen Arbeitsmaschine (1) mit unterschiedlichen Anbaugeräten (3) umfasst.

3. Verfahren nach Anspruch 1 oder 2, **dadurch gekennzeichnet, dass** der Sensor (11) mit einem Bus, insbesondere einem ISOBUS- oder CAN Bus, der landwirtschaftlichen Arbeitsmaschine (1) verbunden ist, und/oder, dass der Sensor (11) herstellerseitig, insbesondere fest, an der landwirtschaftlichen Arbeitsmaschine (1) verbaut und insbesondere in einen Maschinenkommunikationsbus der landwirtschaftlichen Arbeitsmaschine (1) integriert ist, vorzugsweise, dass der Sensor (11) unter dem Traktor verbaut ist.

4. Verfahren nach einem der vorhergehenden Ansprüche, **dadurch gekennzeichnet, dass** der Sensor (11) ein Arbeitshöhensensor ist, vorzugsweise, dass der Arbeitsqualitätsparameter eine absolute Arbeitshöhe (13), insbesondere eine absolute Arbeitstiefe, ist, weiter vorzugsweise, dass die Steueranordnung (12) die Arbeitshöhe (13) auf Basis der Messdaten regelt.

5. Verfahren nach einem der vorhergehenden Ansprüche, **dadurch gekennzeichnet, dass** der Sensor (11) mittels der mindestens einen Sensorhalterung (15) jeweils an einer Montageposition (16) an unterschiedlichen Anbaugeräten (3) reversibel montiert wird, dass die Sensorhalterung (15) vom Sensor (11) getrennt an den unterschiedlichen Anbaugeräten (3) montierbar ist und der Sensor (11) reversibel an der Sensorhalterung (15) montierbar ist, dass der Sensor (11) im montierten Zustand eine Arbeitshöhe (13) des Anbaugeräts (3) betreffende Messdaten aufnimmt und an die Steueranordnung (12) überträgt, dass die Steueranordnung (12) aus einem montagepositionsspezifischen Kalibrationsdatensatz die Arbeitshöhe (13) des jeweiligen Anbaugerätes (3) ermittelt.

6. Verfahren nach einem der vorhergehenden Ansprüche, **dadurch gekennzeichnet, dass** der Sensor (11) ein Abstandssensor ist, und/oder, dass der Sensor (11) ein optischer Sensor und/oder ein Radar-Sensor und/oder ein Lidar-Sensor und/oder ein Ultraschall-Sensor und/oder ein NIR-Sensor ist, dass der Sensor (11) die den Arbeitsqualitätsparameter betreffenden Messdaten während der Durchführung der Feldbearbeitung und/oder nach der Durchführung der Feldbearbeitung misst, vorzugsweise, dass der Sensor (11) oder ein weiterer Sensor (20) einen Feldparameter betreffende Messdaten im Vorfeld misst, weiter vorzugsweise, dass die Steueranordnung (12) den Arbeitsqualitätsparameter aus den Messdaten des Sensors (11) und des weiteren Sensors (20) ermittelt.

7. Verfahren nach einem der vorhergehenden Ansprüche, **dadurch gekennzeichnet, dass** der Sensor (11) ein Lidar-Sensor ist, vorzugsweise, dass der Arbeitsqualitätsparameter eine Krümelung und/oder Einebnung einer Saatbettbereitung und/oder eine Vorderfurchenbreite und/oder ein Pflugbild (9) beim Pflügen und/oder eine Einebnung beim Grubbern und/oder ein Ergebnis der Feldbearbeitung von Planierschienen und/oder Randblech einer Kreiselegge ist.

8. Verfahren nach einem der vorhergehenden Ansprüche, **dadurch gekennzeichnet, dass** der Sensor (11) eine 3D Kamera ist, vorzugsweise, dass der Arbeitsqualitätsparameter eine Einmischung beim Grubbern und/oder ein Seitenzug beim Pflug (9) oder bei der Scheibenegge und/oder eine Genauigkeit des Anschlussfahrens, insbesondere beim Fahren an Steigungen, ist.

9. Verfahren nach einem der vorhergehenden Ansprüche, **dadurch gekennzeichnet, dass** die Steueranordnung (12) während der Durchführung einer Arbeitsaufgabe mindestens einen Maschinenparameter der landwirtschaftlichen Arbeitsmaschine (1) und/oder des jeweiligen Anbaugerätes (3) basierend auf den Messdaten steuert oder regelt und aus diesen und weiteren Messdaten den gemeinsamen Datensatz erzeugt, vorzugsweise, dass die Steueranordnung (12) während der Durchführung einer anderen Arbeitsaufgabe die Messdaten nicht zur Steuerung oder Regelung der landwirtschaftlichen Arbeitsmaschine (1) und/oder des jeweiligen Anbaugerätes (3) verwendet und aus diesen und weiteren Messdaten den gemeinsamen Datensatz erzeugt, weiter vorzugsweise, dass der Sensor (11) während der Durchführung noch einer anderen Arbeitsaufgabe, bei der kein Anbaugerät (3) verwendet wird, Messdaten aufnimmt und die Steueranordnung (12) aus diesen und weiteren Messdaten den gemeinsamen Datensatz erzeugt.

10. Verfahren nach einem der vorhergehenden Ansprüche, **dadurch gekennzeichnet, dass** der mindestens eine Arbeitsqualitätsparameter eine Arbeitstiefe betrifft, und/oder, dass der mindestens eine Arbeitsqualitätsparameter eine Bodenfeuchte und/oder eine Rückverfestigung und/oder eine Durchmischung des Bodens und/oder von Pflanzenresten und/oder eine Bodenzusammensetzung betrifft.

11. Verfahren nach einem der vorhergehenden Ansprüche, **dadurch gekennzeichnet, dass** die Steueranordnung (12) die Durchführung einer Arbeitsaufgabe basierend auf dem gemeinsamen Datensatz plant, vorzugsweise, dass die geplante Arbeitsaufgabe eine Bodenbearbeitung, insbesondere ein Pflügen, und/oder ein Düngevorgang und/oder ein Spritzvorgang und/oder ein Wässerungsvorgang und/oder ein Bestandsführungsvorgang ist.

12. Verfahren nach Anspruch 11, **dadurch gekennzeichnet, dass** die Steueranordnung (12) mindestens einen Maschinenparameter der landwirtschaftlichen Arbeitsmaschine (1) und/oder des Anbaugerätes (3), insbesondere eine Arbeitshöhe (13) des Anbaugerätes (3), basierend auf der geplanten Arbeitsaufgabe und vorzugsweise den den Arbeitsqualitätsparameter betreffenden Messdaten steuert oder regelt.

13. Verfahren nach einem der vorhergehenden Ansprüche, **dadurch gekennzeichnet, dass** die Steueranordnung (12) in der Normierungsroutine die Messdaten mit einer Position verknüpft, und/oder, dass die Steueranordnung (12), zumindest teilweise, insbesondere vollständig, in der landwirtschaftlichen Arbeitsmaschine (1) angeordnet ist, vorzugsweise, dass die Steueranordnung (12) Positionsdaten eines Positionssensors, insbesondere GPS-Sensors, der landwirtschaftlichen Arbeitsmaschine (1) in der Normierungsroutine mit den Messdaten verknüpft.

14. Sensoranordnung eingerichtet zur Verwendung in einem Verfahren nach einem der vorhergehenden Ansprüche.

## Claims

1. A method for collecting agricultural measurement data for an agricultural working machine (1) which is combined with at least one agricultural attachment (3) in order to process a field,
wherein a sensor system (10) is provided which has a sensor (11) and a control system (12),
**characterized in that**
the sensor (11) is integrated into combinations of agricultural working machine (1) and a plurality of agricultural attachments (3), wherein the sensor (11) records measurement data relating to at least one work quality parameter of the respective attachment (3) and transfers them to the control system (12) and wherein, in a standardization routine, the control system (12) generates a common data set from the measurement data relating to the different attachments (3).

2. The method according to claim 1, **characterized in that** the control system (12) determines the work quality parameter for the respective attachment (3) from the measurement data by means of a calibration data set which is specific to the attachment, and/or in that the control system (12) converts the measurement data into standardized, in particular attachment-independent measurement data by means of an attachment-specific standardization data set and amalgamates them into the common data set, preferably **in that** the control system (12) generates, from the standardized measurement data, a common data set which comprises the work quality parameter for work tasks for the agricultural working machine (1) with different attachments (3) which are processed differently.

3. The method according to claim 1 or claim 2, **characterized in that** the sensor (11) is connected with a bus, in particular an ISOBUS or a CAN bus, of the agricultural working machine (1), and/or **in that** the sensor (11) is installed on the agricultural working machine (1) by the manufacturer, in particular permanently installed, and in particular is integrated into a machine communications bus of the agricultural working machine (1), preferably **in that** the sensor (11) is installed under the tractor.

4. The method according to one of the preceding claims, **characterized in that** the sensor (11) is a working height sensor, preferably **in that** the work quality parameter is an absolute working height (13), in particular an absolute working depth, more preferably in that the control system (12) regulates the working height (13) on the basis of the measurement data.

5. The method according to one of the preceding claims, **characterized in that** the sensor (11) is reversibly mounted on different attachments (3) at a respective mounting position (16) by means of the at least one sensor retainer (15), **in that** the sensor retainer (15) can be mounted on the different attachments (3) separately from the sensor (11) and the sensor (11) can be reversibly mounted on the sensor retainer (15), **in that**, in the mounted state, the sensor (11) records measurement data relating to a working height (13) of the attachment (3) and transfers them to the control system (12), **in that** the control system (12) determines the working height (13) of the respective attachment (3) from a calibration data set which is specific to the mounting position.

6. The method according to one of the preceding claims, **characterized in that** the sensor (11) is a distance sensor, and/or **in that** the sensor (11) is an optical sensor and/or a radar sensor and/or a lidar sensor and/or an ultrasonic sensor and/or a NIR sensor, **in that** the sensor (11) measures the measurement data relating to the work quality parameter while the processing of the field is being carried out and/or after processing of the field has been carried out, preferably **in that** the sensor (11) or a further sensor (20) measures measurement data relating to a field parameter in the forefield, more preferably **in that** the control system (12) determines the work quality parameter from the measurement data from the sensor (11) and from the further sensor (20).

7. The method according to one of the preceding claims, **characterized in that** the sensor (11) is a lidar sensor, preferably **in that** the work quality parameter is a crumbling and/or levelling of a seed bed preparation and/or a front furrow width and/or a ploughed surface (9) when ploughing and/or a levelling when grubbing and/or a result of processing of the field by levelling bars and/or an edge plate of a rotary harrow.

8. The method according to one of the preceding claims, **characterized in that** the sensor (11) is a 3D camera, preferably **in that** the work quality parameter is a mixing during grubbing and/or a sideways drag on the plough (9) or on the disk harrow and/or a precision of the next run, in particular when moving on inclines.

9. The method according to one of the preceding claims, **characterized in that** when carrying out a work task, the control system (12) controls or regulates at least one machine parameter of the agricultural working machine (1) and/or of the respective attachment (3) on the basis of the measurement data and generates the common data set from these and further measurement data, preferably **in that** when carrying out another work task, the control system (12) does not use the measurement data for controlling or regulating the agricultural working machine (1) and/or the respective attachment (3) and generates the common data set from these and further measurement data, more preferably **in that**, when carrying out yet another work task, in which no attachment (3) is used, the sensor (11) records measurement data and the control system (12) generates the common data set from these and further measurement data.

10. The method according to one of the preceding claims, **characterized in that** the at least one work quality parameter relates to a working depth, and/or **in that** the at least one work quality parameter relates to a ground moisture and/or a reconsolidation and/or a mixing of the ground and/or of plant residues and/or a ground composition.

11. The method according to one of the preceding claims, **characterized in that** the control system (12) plans the execution of a work task on the basis of the common data set, preferably **in that** the planned work task is a processing of the ground, in particular a ploughing, and/or a fertilizing procedure and/or a spraying procedure and/or a watering procedure and/or a crop management procedure.

12. The method according to claim 11, **characterized in that** the control system (12) controls or regulates at least one machine parameter of the agricultural working machine (1) and/or of the attachment (3), in particular a working height (13) of the attachment (3), on the basis of the planned work task and preferably of the measurement data relating to the work quality parameter.

13. The method according to one of the preceding claims, **characterized in that** in the standardization routine, the control system (12) links the measurement data with a position, and/or **in that** the control system (12) is at least partially, in particular entirely, disposed in the agricultural working machine (1), preferably **in that** in the standardization routine, the control system (12) links positional data of a position sensor, in particular a GPS sensor, for the agricultural working machine (1) with the measurement data.

14. A sensor system configured for use in a method according to one of the preceding claims.

## Revendications

1. Procédé de collecte de données de mesure agricoles dans une machine de travail agricole (1) qui est combinée avec au moins un outil agricole attelé (3) en vue du travail en champ,
selon lequel il est prévu un dispositif à capteur (10) qui présente un capteur (11) et un dispositif de commande (12),
**caractérisé en ce que**
le capteur (11) est intégré dans des combinaisons constituées de la machine agricole (1) et de plusieurs outils agricoles attelés (3), le capteur (11) enregistrant des données de mesure concernant au moins un paramètre de qualité de travail de l'outil attelé (3) respectif et les transmettant au dispositif de commande (12), et le dispositif de commande (12) générant, dans une routine de normalisation, un ensemble de données commun à partir de données de mesure concernant les différents outils attelés (3).

2. Procédé selon la revendication 1, **caractérisé en ce que** le dispositif de commande (12) détermine le paramètre de qualité de travail de l'outil attelé (3) respectif à partir des données de mesure, à l'aide d'un ensemble de données d'étalonnage spécifique à l'outil attelé, et/ou **en ce que** le dispositif de commande (12) transforme les données de mesure en données de mesure normalisées, notamment indépendantes de l'outil attelé, à l'aide d'un ensemble de données de normalisation spécifique à l'outil attelé, et les regroupe pour obtenir l'ensemble de données commun, de préférence **en ce que** le dispositif de commande (12) génère, à partir des données de mesure normalisées, un ensemble de données commun qui comprend le paramètre de qualité de travail pour des tâches de travail différentes traitées de la machine agricole (1) avec des outils attelés (3) différents.

3. Procédé selon la revendication 1 ou 2, **caractérisé en ce que** le capteur (11) est relié à un bus, notamment un ISOBUS ou un bus CAN, de la machine agricole (1) et/ou **en ce que** le capteur (11) est monté sur la machine agricole (1) côté constructeur, notamment de manière fixe, et est notamment intégré dans un bus de communication machine de la machine agricole (1), de préférence **en ce que** le capteur (11) est monté sous le tracteur.

4. Procédé selon une des revendications précédentes, **caractérisé en ce que** le capteur (11) est un capteur de hauteur de travail, de préférence **en ce que** le paramètre de qualité de travail est une hauteur de travail (13) absolue, notamment une profondeur de travail absolue, et en outre de préférence **en ce que** le dispositif de commande (12) règle la hauteur de travail (13) sur la base des données de mesure.

5. Procédé selon une des revendications précédentes, **caractérisé en ce que** le capteur (11) est monté de façon réversible à l'aide du support de capteur (15), au nombre d'au moins un, respectivement dans une position de montage (16) sur des outils attelés (3) différents, **en ce que** le support de capteur (15) peut être monté séparément du capteur (11) sur les différents outils attelés (3) et le capteur (11) peut être monté de façon réversible sur le support de capteur (15), **en ce que**, à l'état monté, le capteur (11) enregistre des données de mesure concernant une hauteur de travail (13) de l'outil attelé (3) et les transmet au dispositif de commande (12), **en ce que** le dispositif de commande (12) détermine la hauteur de travail (13) de l'outil attelé (3) respectif à partir d'un ensemble de données d'étalonnage spécifique à la position de montage.

6. Procédé selon une des revendications précédentes, **caractérisé en ce que** le capteur (11) est un capteur de distance et/ou **en ce que** le capteur (11) est un capteur optique et/ou un capteur radar et/ou un capteur Lidar et/ou un capteur à ultrasons et ou un capteur NIR, **en ce que** le capteur (11) mesure les données de mesure concernant le paramètre de qualité de travail, pendant la réalisation du travail en champ et/ou après la réalisation du travail en champ, de préférence **en ce que** le capteur (11) ou un autre capteur (20) mesure au préalable des données de mesure concernant un paramètre de champ, et en outre de préférence en ce que le dispositif de commande (12) détermine le paramètre de qualité de travail à partir des données de mesure du capteur (11) et du capteur (20) supplémentaire.

7. Procédé selon une des revendications précédentes, **caractérisé en ce que** le capteur (11) est un capteur Lidar, de préférence **en ce que** le paramètre de qualité de travail est un émiettement et/ou un nivellement lors d'une préparation de lit de semence et/ou une largeur de sillon avant et/ou un schéma de charrue (9) lors du labourage et/ou un nivellement lors du décompactage et/ou un résultat du travail en champ avec des barres niveleuses et/ou la tôle latérale d'une herse rotative.

8. Procédé selon une des revendications précédentes, **caractérisé en ce que** le capteur (11) est une caméra 3D, de préférence **en ce que** le paramètre de qualité de travail est un mélange lors du décompactage et/ou une traction latérale sur la charrue (9) ou sur la herse à disques et/ou une précision des raccords de passage, notamment lors des déplacements en côte.

9. Procédé selon une des revendications précédentes, **caractérisé en ce que** pendant la réalisation d'une tâche de travail, le dispositif de commande (12) commande ou règle au moins un paramètre machine de la machine agricole (1) et/ou de l'outil attelé (3) respectif, sur la base des données de mesure, et génère l'ensemble de données commun à partir de ces données de mesure et d'autres données de mesure, de préférence **en ce que** pendant la réalisation d'une autre tâche de travail, le dispositif de commande (12) n'utilise pas les données de mesure pour la commande ou le réglage de la machine agricole (1) et/ou de l'outil attelé (3) respectif et génère l'ensemble de données commun à partir de ces données de mesure et d'autres données de mesure, et en outre de préférence **en ce que** pendant la réalisation encore d'une autre tâche de travail lors de laquelle on n'utilise pas d'outil attelé (3), le capteur (11) enregistre des données de mesure, et le dispositif de commande (12) génère l'ensemble de données commun à partir de ces données de mesure et d'autres données de mesure.

10. Procédé selon une des revendications précédentes, **caractérisé en ce que** le paramètre de qualité de travail, au nombre d'au moins un, concerne une profondeur de travail et/ou **en ce que** le paramètre de qualité de travail, au nombre d'au moins un, concerne une humidité du sol et/ou un rappuyage et/ou un mélange du sol et/ou de résidus végétaux et/ou une composition du sol.

11. Procédé selon une des revendications précédentes, **caractérisé en ce que** le dispositif de commande (12) planifie la réalisation d'une tâche de travail sur la base de l'ensemble de données commun, de préférence **en ce que** la tâche de travail planifiée est un travail du sol, notamment un labourage, et/ou une opération d'épandage d'engrais et/ou une opération de pulvérisation et/ou une opération d'irrigation et/ou une opération de gestion des cultures.

12. Procédé selon la revendication 11, **caractérisé en ce que** le dispositif de commande (12) commande ou règle au moins un paramètre machine de la machine agricole (1) et/ou de l'outil attelé (3), notamment une hauteur de travail (13) de l'outil attelé (3), sur la base de la tâche de travail planifiée et, de préférence, des données de mesure concernant le paramètre de qualité de travail.

13. Procédé selon une des revendications précédentes, **caractérisé en ce que** dans la routine de normalisation, le dispositif de commande (12) associe les données de mesure à une position et/ou **en ce que** le dispositif de commande (12) est installé au moins en partie, et notamment dans son intégralité, dans la machine agricole (1), de préférence **en ce que** dans la routine de normalisation, le dispositif de commande (12) associe des données de position d'un capteur de position, notamment d'un capteur GPS, de la machine agricole (1) aux données de mesure.

14. Dispositif à capteur agencé en vue d'une utilisation dans un procédé selon une des revendications précédentes.
